# EUROPÄISCHE PATENTANMELDUNG

(11) **EP 0 927 978 A2**
(43) Veröffentlichungstag der Anmeldung: **07.07.1999**
(21) Anmeldenummer: 99106527.7
(22) Anmeldetag: 15.12.1995
(51) Int. Cl.: G07F 17/30, G11B 27/00

(54) **Multimedia-Box**

(30) Priorität: 13.03.1995 DE 19508992; 08.08.1995 DE 19529157; 20.10.1995 DE 19539172
(62) Teilanmeldung aus: 95941715.5
(71) Anmelder: NSM AKTIENGESELLSCHAFT, 55411 Bingen (DE)
(72) Erfinder: Niederlein, Horst, 55411 Bingen am Rhein (DE); Kühl, Thomas, 55442 Daxweiler (DE)
(74) Vertreter: Gossel, Hans K., Dipl.-Ing.

(57) **Zusammenfassung**

Eine Multimedia-Box weist einen Audio- und/oder Video- und/oder Bild- und/oder Grafikdaten speichernden digitalen Massenspeicher und eine Bedieneinheit zum Auswählen digital gespeicherter Musikstücke und/oder Videos und/oder Bilder und/oder Grafiken auf. Eine einen Mikroprozessor umfassende Steuereinheit führt die durch einen DA-Wandler in analoge Signale umgewandelten digitalen Audio-Daten einer Verstärker-Lautsprecher-Einheit und die Video- und/oder Bild- und/oder Grafik-Daten einem Monitor zu. Der Massenspeicher besteht aus einem oder mehreren Halbleiter-Speicher-Chips. Die Bedieneinheit ist aus einer Tastatur und/oder aus einer Fernbedienung und/oder aus einem Tastenmonitor gebildet.

## Beschreibung

Die Erfindung betrifft eine Multimedia-Box, insbesondere eine mit Geld zu betätigende Musikbox, nach dem Oberbegriff des Patentanspruchs 1.

Die Leistung und Wiedergabequalität von Musikboxen ist erheblich durch den Ersatz von Schallplatten durch CDs gesteigert werden, auf denen die abspielbaren Musikstücke in digitaler Form gespeichert sind. Es sind Musikboxen der eingangs angegebenen Art bekannt, die mit CD-Wechsler ausgestattet sind, die 100 CD speichern können. Diese bekannten Musikboxen erfordern jedoch eine aufwendige Mechanik, da die jeweilige CD, auf der sich das abzuspielende Musikstück befindet, dem Speicher entnommen und auf den CD-Abspielteller gelegt werden muß, gegebenenfalls nachdem die CD an ihren Platz in den Speicher zurückgeführt worden ist, die sich zuvor auf dem Abspielteller befunden hat. Befinden sich ausgewählte Musikstücke auf unterschiedlichen CDs, was üblicherweise der Fall sein wird, entstehen zwischen dem Abspielen ausgewählter Musikstücke längere Pausen, die durch den Wechsel der CD bedingt sind.

Desweiteren ist es durch die Verwendung von CDs als Massenspeicher auch möglich geworden, Video- und/oder Bild-Informationen digital zu speichern und über einen Monitor wiederzugeben. Auch hier besteht mitunter das Bedürfnis, auf die auf verschiedenen CDs gespeicherten Bilddaten gleichzeitig oder ohne Pause hintereinander zugreifen zu können.

Ein weiterer Nachteil einer mit einem CD-Wechsler ausgestatteten Musikbox besteht darin, daß zur Aktualisierung von Musikstücken alte CDs gegen neue CDs ausgetauscht werden müssen. Dies bedingt einen verhältnismäßig hohen Wartungsaufwand, da die CDs nur vor Ort ausgetauscht werden können.

Aufgabe der Erfindung ist es daher, eine Multimedia-Box der eingangs angegebenen Art zu schaffen, die kostengünstig und gleichzeitig mit einem gesteigerten Leistungsangebot betrieben werden kann.

Erfindungsgemäß wird diese Aufgabe durch die Merkmale des Patentanspruchs 1 gelöst. Halbleiter-Speicher stehen heute im Megabyte-Bereich zu verhältnismäßig geringen Kosten zur Verfügung, so daß diese auch zur Speicherung digital codierter Musikstücke und/oder Videos und/oder Bilder und/oder Grafiken verwendet werden können. Gegenwärtig befinden sich 32-Megabyte-Speicher in der Entwicklung und es ist zu erwarten, daß in absehbarer Zukunft Speicher mit 64 Megabyte und sogar mit größerer Kapazität zu vertretbaren Preisen hergestellt werden.

Die erfindungsgemäße Multimedia-Box besitzt gegenüber herkömmlichen Musikboxen bzw. CD-Abspieleinheiten keine mechanisch bewegten Teile, wie Platten-Drehteller und Greifer- und Transporteinheiten zur Entnahme von Platten aus Speicherfächern, Transport der Platten zu dem Drehteller und Rückführung der Platten in die diese halternden Fächer. Außerdem lassen sich bei der erfindungsgemäßen Multimedia-Box ausgewählte Musikstücke und/oder Videos und/oder Bilder und/oder Grafiken ohne Pausen abspielen, da ein direkter Zugriff auf die ausgewählten Musikstücke und/oder Videos und/oder Bilder und/oder Grafiken ohne bewegte mechanische Teile möglich ist. Demgegenüber ist bei herkömmlichen Musikboxen das Abspielen von Musikstücken ohne Pausenzeit nur mit größerem technischen Aufwand und unter Verwendung von mindestens zwei Abspieleinheiten möglich.

Ein weiterer Vorteil der erfindungsgemäßen Multimedia-Box besteht darin, daß neue Musikstücke ohne großen Wartungsaufwand aktualisiert werden können. Die Kosten für den Betreiber können weiterhin dadurch gesenkt werden, daß verschiedene Musikstücke und/oder Videos und/oder Bilder und/oder Grafiken im Multi-Tasking-Betrieb von einer zentralen Speichereinheit aus auf mehreren Endgeräten abgespielt werden können.

Die erfindungsgemäße Multimedia-Box besitzt außerdem den Vorteil, daß der Benutzer auf ein erweitertes Leistungsangebot zurückgreifen kann. Die Anzahl der zur Auswahl gestellten Musikstücke und/oder Videos und/oder Bilder und/oder Grafiken kann beliebig erweitert werden, wobei die Erweiterung des Massenspeichers auf verschiedene Arten erfolgen kann.

Die erfindungsgemäße Musikbox zeichnet sich durch Robustheit, niedriges Gewicht und geringe Abmessungen aus, da auf mechanisch bewegte Teile verzichtet werden kann. Trotz der geringen Abmessungen des Endgeräts kann der Massenspeicher nahezu beliebig erweitert werden, wenn zumindest ein Teil des Massenspeichers in einer zentralen Speichereinheit ausgelagert ist, die über Datenfernübertragung mit dem Endgerät verbunden ist. Außerdem benötigt die erfindungsgemäße Multimedia-Box durch die Verwendung von elektronischen Speicherkomponenten einen verhältnismäßig geringen Energiebedarf.

Ein weiterer Vorteil der erfindungsgemäßen Multimedia-Box besteht darin, daß sich durch die Verwendung von Halbleiter-Speicher-Chips eine hohe Datenübertragungsrate und gleichzeitig ein sicherer Kopierschutz bei der Datenübertragung zwischen verschiedenen Halbleiter-Speicher-Chips erreichen läßt.

Seinem grundsätzlichen Aufbau nach benötigt die erfindungsgemäße Multimedia-Box eine einen Mikroprozessor umfassende Steuereinheit, einen Programm- und Arbeitsspeicher sowie einen oder mehrere Speicher-Chips, auf denen die Audio- und/oder Video- und/oder Bild- und/oder Grafik-Daten gespeichert sind, einen DA-Wandler mit Verstärker und Lautsprecher sowie einen Monitor.

Da Musikboxen üblicherweise durch Einwurf von Münzen oder Einschieben von Geldscheinen betätigt werden, ist zusätzlich eine Münz- und/oder Geldscheineinheit vorgesehen, die erst dann entsprechend dem vorhandenen Kredit eine bestimmte Anzahl von auszuwählenden Musikstücken zuläßt.

Die Speicher-Chips sind zweckmäßigerweise auf Speichersteckkarten angeordnet, die in mit Kontakten versehene Halter der Multimedia-Box einsteckbar sind. Hierdurch sind die mit den jeweiligen Daten geladenen Speicher-Chips auf einfache Weise austauschbar. Zweckmäßigerweise sind mehrere Kontakthalter für Speichersteckkarten vorgesehen. Die Multimedia-Box kann mit einer Batterie von Kontakthaltern versehen sein, so daß in diese eine große Anzahl von Speicher-Chips einsteckbar ist. Der Massenspeicher ist dabei vorzugsweise so ausgelegt, daß eine Übertragung der Daten auf andere Speichermedien nicht erforderlich ist.

Nach einer bevorzugten Ausführungsform ist ein außerhalb der Multimedia-Box zugänglicher Steckkartenadapter für die Speichersteckkarten vorgesehen, so daß der Massenspeicher temporär durch Speichersteckkarten erweiterbar ist. Vorzugsweise ist der Steckkartenadapter dabei erst nach Entrichtung eines Geldbetrages aktivierbar. Hierdurch wird dem Benutzer die Möglichkeit gegeben, digitale Daten zwischen einer von ihm mitgebrachten Speichersteckkarte und dem Massenspeicher auszutauschen. So ist es zum Beispiel möglich, daß Musikstücke und/oder Videos und/oder Bilder und/oder Grafiken, die auf einer benutzereigenen Speichersteckkarte gespeichert sind, von der Multimedia-Box abgespielt werden, sobald der Benutzer die Speichersteckkarte dem Steckkartenadapter zugeführt hat. Umgekehrt ist es auch denkbar, daß der Benutzer über die Bedieneinheit bestimmte Musikstücke und/oder Videos und/oder Bilder und/oder Grafiken auswählt, die dann auf eine in den Steckkartenadapter zugeführte Speichersteckkarte kopierbar sind. Der Steckkartenadapter kann ebenfalls aus einem mit Kontakten versehenen Halter bestehen, vorzugsweise wird aber ein automatischer Ein- und Ausgabemechanismus (mail slot) verwendet. Durch einen derartigen Ein- und Ausgabemechanismus können mitgebrachte Speichersteckkarten nicht nur zugeführt und wieder entnommen werden, sondern es können nach Entrichtung eines Geldbetrages auch unbenutzte Speichersteckkarten erworben werden, wobei hierfür eine genügende Anzahl unbenutzter Speichersteckkarten in der Multimedia-Box vorzusehen ist. Durch die Verwendung eines Steckkartenadapters ist somit die Speichersteckkarte zur Speicherung von digitalen Multimedia-Daten universell verwendbar. Neben der bevorzugten Speicherung von digitalen Musikstücken und/oder Videos und/oder Bildern und/oder Grafiken können z.B. auch Computer-Grafiken oder Computer-Programme über den Steckkartenadapter ausgetauscht werden.

Nach einer bevorzugten Ausführungsform ist vorgesehen, daß mindestens ein Speicher-Chip, vorzugsweise jedoch sämtliche Speicher-Chips, mit einem Innaltsverzeichnis versehen ist, das für jedes Musikstück, Video oder Bild die Speicheradresse enthält. Die Bedieneinheit ist auf das Inhaltsverzeichnis derart abgestimmt, daß mit dieser die dem ausgewählten Musikstück, Video oder Bild zugeordnete Adresse anwählbar ist. Jeder Speicher-Chip enthält somit zusätzlich ein Inhaltsverzeichnis, das als Eingangsgröße die jeweilige Auswahltaste bzw. den jeweiligen Auswahlcode und als fest zugeordnete Ausgangsgröße die Startadresse des Musikstücks, Videos oder Bilds enthält. Als weitere Einträge kann das Inhaltsverzeichnis noch spezielle Informationen zum jeweiligen Musikstück, Video oder Bild enthalten.

Bei den Speicher-Chips kann es sich um festprogrammierte Speicher (ROM) handeln. Zweckmäßigerweise sind die Speicher-Chips jedoch programmierbar (PROM) oder wiederholbar programmierbar (EPROM). Als wiederholt programmierbare Speicher können auch Batterie-RAMs oder auch von der Stromversorgung der Multimedia-Box gepufferte RAMs eingesetzt werden.

Vorzugsweise sind die auf den Speicher-Chips geladenen Informationen des Inhaltsverzeichnisses auf einem Monitor darstellbar. Auf dem Monitor erscheinen die in den Inhaltsverzeichnissen der Speicher-Chips gesammelten Daten in Form von Texten und/oder Bildern und/oder Grafiken und gegebenenfalls mit zusätzlichen Informationen, so daß der Benutzer von dem Monitor einen Auswahlcode ablesen und diesen über die Bedieneinheit eingeben kann. Die Darstellung auf dem Monitor kann durchlaufend oder auch durch die Bedieneinheit fortschaltbar erfolgen. Die Bedieneinheit besteht dabei vorzugsweise aus einer Tastatur und/oder aus einem Tastmonitor (touch-screen) und kann gegebenenfalls auch eine Fernbedienung umfassen.

Nach einer bevorzugten Ausführungsform ist vorgesehen, daß auf einen oder mehreren Speicher-Chips von einer Zentrale mittels Datenfernübertragung neue Audio- und/oder Video- und/oder Bild- und/oder Grafik-Daten kopierbar sind. Hierbei können die neuen Daten von entfernten Zentralen abgerufen werden, die benötigte und insbesondere besonders beliebte und neue Musikstücke und/oder Videos und/oder Bilder und/oder Grafiken bereithalten. Ein Austausch der Speichersteckkarten in der Multimedia-Box ist somit nicht erforderlich, so daß die Speichersteckkarten ständig in der Multimedia-Box verbleiben können. Die Aktualisierung der Speicher-Chips kann dabei entsprechend der in der Multimedia-Box gespeicherten Daten erfolgen. Weiterhin ist es möglich, daß sich auch die Speicher-Chips selbst in der entfernten Zentrale befinden, wobei die auf den Speicher-Chips geladenen Daten dann von der Multimedia-Box direkt über Datenfernübertragung abrufbar sind.

Nach einer weiteren bevorzugten Ausführungsform sind verschiedene von der Multimedia-Box entfernte Zentralen zweckmäßigerweise durch Datenfernübertragung miteinander verbunden. Hierdurch ist ein Austausch von Audio- und/oder Video- und/oder Bild- und/oder Grafikdaten zwischen verschiedenen Zentralen möglich, so daß die erforderliche Erweiterung des Massenspeichers in einer Zentrale und auch in dem Endgerät der Multimedia-Box minimiert werden kann. Ein Kopierschutz beim Übertragen der Daten kann dadurch sichergestellt werden, daß durch eine entsprechende Software oder auch durch ein entsprechendes Design der Datenschnittstelle auf den Halbleiter-Speicher-Chips ein geeignetes Datenübertragungsprotokoll festgelegt wird.

Um den Speicherraum der Speicher-Chips besser ausnutzen zu können, ist nach einer weiteren vorteilhaften Ausgestaltung vorgesehen, daß die digitalen Daten auf den Speicher-Chips in komprimierter Form gespeichert werden. Zum Abspielen müssen die digitalen Daten dazu wieder dekomprimiert werden. Die Komprimierung und Dekomprimierung digitaler Audio-, Video- oder Bild-Daten einschließlich der zugehörigen Encoder und Decoder ist grundsätzlich bekannt. Die komprimierten Daten können zum einen von einer Speichersteckkarte auf die andere Speichersteckkarte direkt übertragen werden. Zum anderen ist es auch möglich, digitale Daten in einen Zwischenspeicher zunächst in unkomprimierter Form aufzunehmen und sodann nach einer Komprimierung die Daten auf eine Speichersteckkarte zu übertragen. Außerdem können auch gestörte Daten unterdrückt werden, ohne daß die Wiedergabe einen merklichen Qualitätsverlust erleidet.

Eine besondere Form der Wiedergabe von Musikstücken besteht in sogenannten "Videoclips". Nach einer weiteren bevorzugten Ausführungsform ist deshalb vorgesehen, daß bei der Wiedergabe der digital gespeicherten Audiodaten gleichzeitig Videos oder Bilder auf dem Monitor darstellbar sind.

Ausführungsbeispiele der Erfindung werden nachstehend anhand der Zeichnung näher erläutert. In dieser zeigt
- Fig. 1: eine schematische Darstellung der Frontansicht einer Multimedia-Box,
- Fig. 2: eine Speichersteckkarte mit einem Speicher-Chip,
- Fig. 3: eine Batterie von Speichersteckkarten in Draufsicht und Seitenansicht,
- Fig. 4: ein erstes Ausführungsbeispiel der Erfindung,
- Fig. 5: ein zweites Ausführungsbeispiel der Erfindung,
- Fig. 6: ein drittes Ausführungsbeispiel der Erfindung und
- Fig. 7: ein viertes Ausführungsbeispiel der Erfindung.

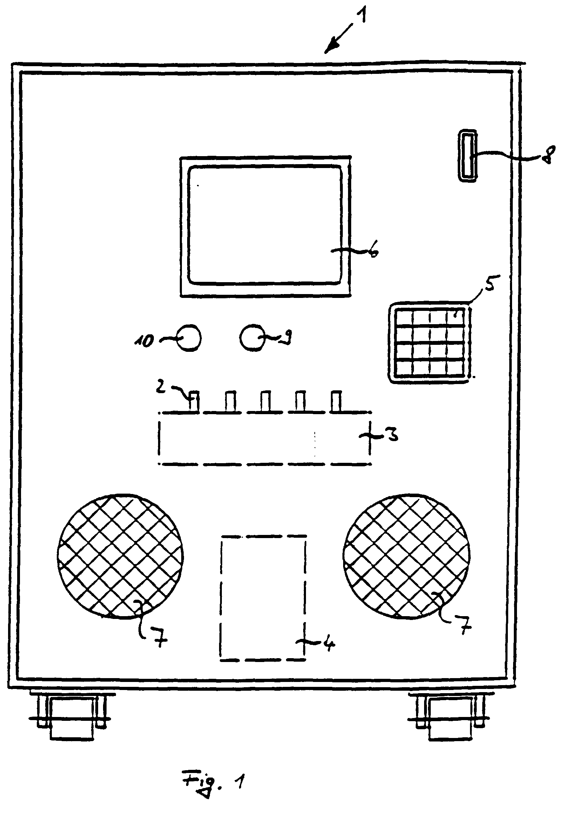

Fig. 1 zeigt die Frontansicht einer Multimedia-Box 1 mit den erfindungsgemäßen Zusatzeinrichtungen.

In der Frontplatte ist für den Bediener gut sichtbar ein Bildschirm 6 eingelassen, daneben befindet sich eine Tastatur 5 zur Eingabe von Buchstaben und/oder Zahlenkombinationen. Oberhalb der Bedienelemente befindet sich ein Münzeinwurf 8, an dem sich im Gerät eine Münzverarbeituhg anschließt.

Im unteren Rendbereich der Multimedia-Box sind zwei Lautsprecher 7 zur Ausgabe der digital gespeicherten Musikstücke eingelassen. Zusätzlich können Anzeigeelemente 9, 10 an der Frontplatte vorgesehen sein, um bestimmte Zustände des Gerätes anzuzeigen. Im Gerät befinden sich diverse Schaltungsmodule, von denen eine Batterie 3 von Speichersteckkarten 2 und eine Steuereinheit (SE) 4 gestrichelt dargestellt sind.

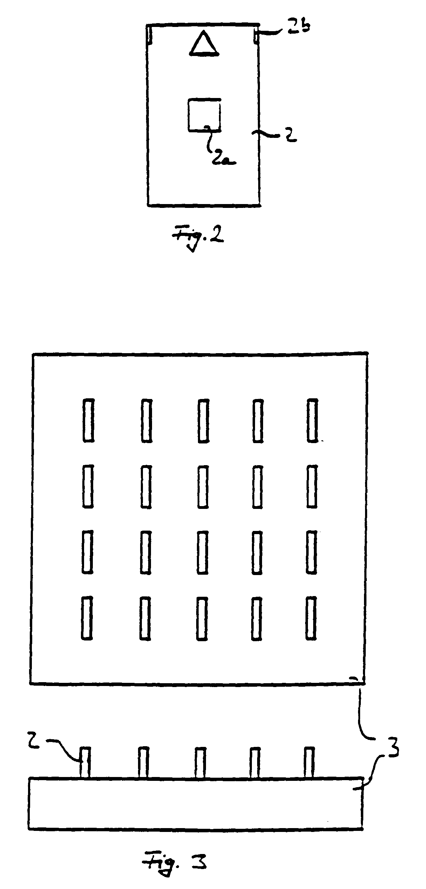

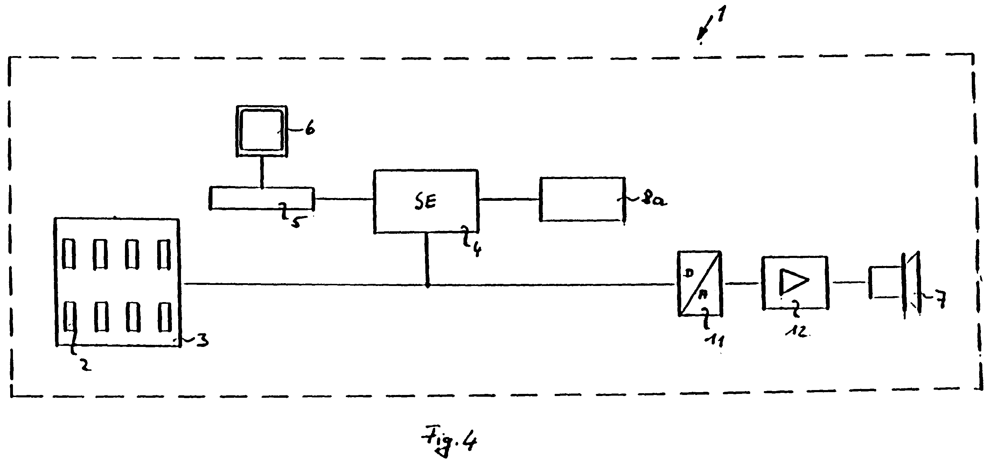

Fig. 2 zeigt eine Speichersteckkarte 2, die als Träger für einen Speicher-Chip 2a dient und die an einer Längsseite mit einer Reihe von Steckkontakten 2b versehen ist. Jeder Steckkontakt ist dabei mit einem Pin des Speicher-Chips verbunden. Fig. 3 zeigt, wie mehrere Speichersteckkarten in einer Batterie 3 von Speichersteckkarten zusammengefaßt sind. Die Speichersteckkarten sind dabei in Kontakthalter der Batterie einsteckbar.

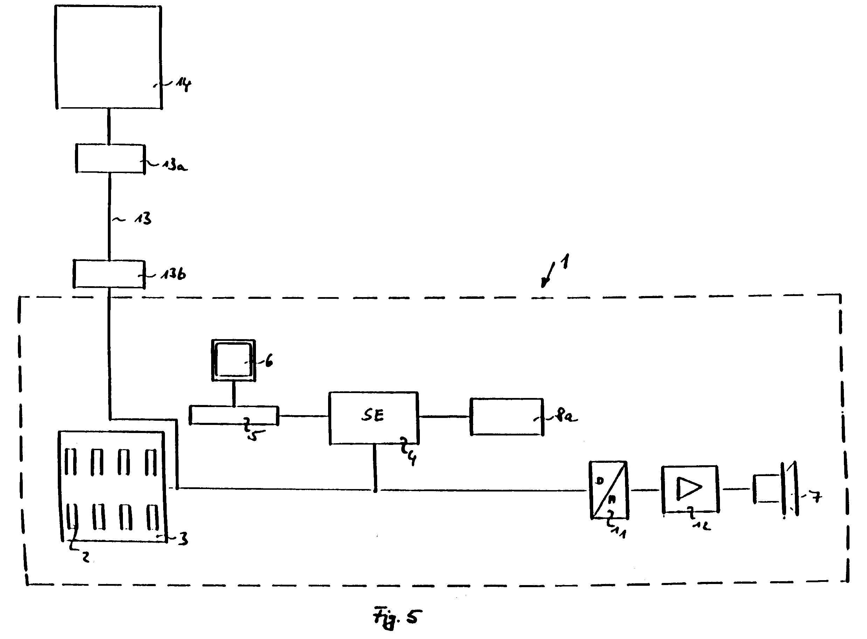

Anhand von Fig. 4 wird nun der grundsätzliche Aufbau und die Funktion der erfindungsgemäßen Multimedia-Box beschrieben. Die Steuereinheit 4, bei der es sich um einen Mikrocomputer handelt, steuert sämtliche Gerätefunktionen. Durch Einwurf des erforderlichen Geldbetrages kann der Bediener das Gerät aktivieren. Die Münzverarbeitung 8a prüft dabei, ob tatsächlich der geforderte Betrag eingeworfen wurde. Auf dem Bildschirm 6 erscheint daraufhin eine Übersicht aller Musikstücke, die auf den Speicher-Chips in digitaler Form gespeichert sind. Die Informationen über die Musikstücke, wie z.B. Titel, Musikgruppe, oder ähnliches, sind auf mindestens einem Speicher-Chip, vorzugsweise auf sämtlichen Speicher-Chips, unter einer fest vorgegebenen Speicheradresse in einem Inhaltsverzeichnis abgespeichert. Somit kann der Mikrocomputer 4 diese Informationen von jedem Speicher-Chip unter der besagten Speicheradresse auslesen und auf dem Bildschirm 6 zur Anzeige bringen, wobei die Informationen aus Text und/oder Bildern bestehen können. Mit Hilfe der Tastatur 5 kann der Bediener zwischen verschiedenen Bildschirmseiten wie in einem Katalog blättern.

Die Auswahl eines bestimmten Musikstückes erfolgt z. B. durch eine Buchstaben-/Zahlenkombination, die auf der Übersichtsanzeige bei jedem Musikstück vermerkt ist. Eine von dem Bediener auf der Tastatur 5 eingegebene Buchstaben-/Zahlenkombination wird von dem Mikrocomputer 4 in eine Startadresse des jeweiligen Speicher-Chips umgerechnet. Diese Umrechnung geschieht aufgrund von Dateninformationen, die ebenfalls in den Inhaltsverzeichnissen der Speicher-Chips gespeichert sind. Die unter der somit berechneten Startadresse abgespeicherten Daten werden sodann in Echtzeit einem DA-Wandler 11 zugeführt und über einen Verstärker 12 auf dem Lautsprecher 7 ausgegeben. Falls mehrere Musikstücke vom Bediener angewählt wurden, können diese hintereinander ohne Pausenzeit abgespielt werden, da ein Sprung von einer Speicheradresse eines Musikstücks zu einer Speicheradresse eines anderen Musikstücks keine Zeitverzögerung zur Folge hat.

Auf den Speicher-Chip können natürlich digitale Daten jeglicher Form gespeichert werden. Neben digitalisierten Musikstücken lassen sich somit z.B. auch digitalisierte Videoinformationen in Form von stehenden oder bewegten Bildern abspeichern. Hierdurch ist es insbesondere möglich, ein sog. Video-Clip auf der Musikbox abzuspielen. Neben der Musikinformation, die über den Lautsprecher 7 ausgegeben wird, kann somit parallel dazu die entsprechende Bildinformation über den Bildschirm 6 zur Anzeige gebracht werden.

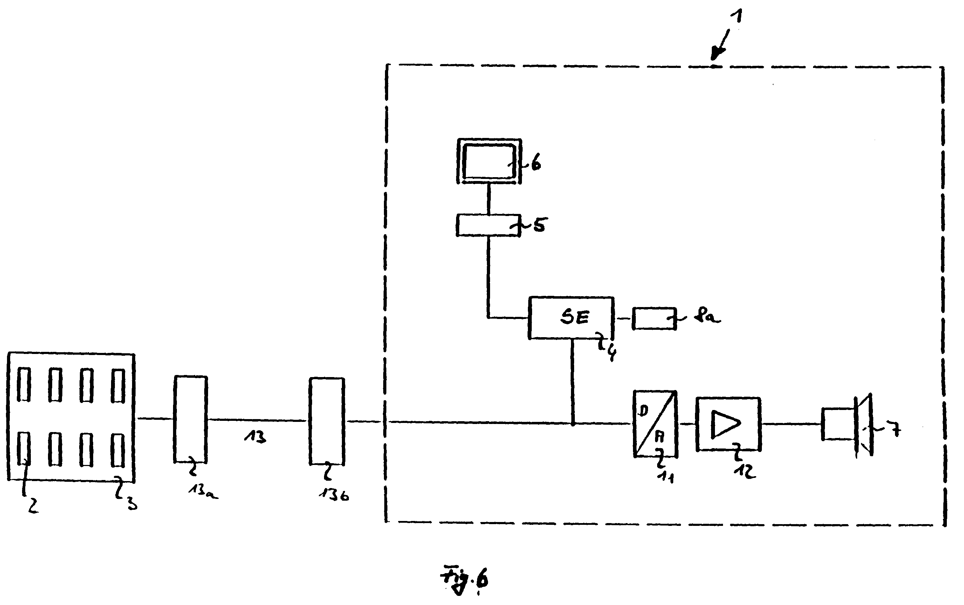

Fig. 5 zeigt ein zweites Ausführungsbeispiel der erfindungsgemäßen Multimedia-Box. Der innere Aufbau der Multimedia-Box 1 gleicht dabei weitgehend der Multimedia-Box in Fig. 4. Zusätzlich ist die Steuereinheit 4 allerdings mit einer Zentrale 14 verbunden, in der eine große Menge von Musikstücken in Form von digitalisierten Audio-, Video- und/oder Bilddaten auf geeigneten Massenspeichern, also z.B. CD-Wechslern oder weiteren Speicher-Chips gespeichert sind. Die Zentrale 14 ist mit einer Datenfernübertragungsleitung 13 und entsprechenden Modems 13a und 13b mit der Multimedia-Box 1 verbunden. Hierdurch ist es möglich, daß die Speicher-Chips bei Bedarf mit neuen Musikstücken geladen werden können. Vorzugsweise können dabei diese neuen Musikstücke vom Geräteaufsteller gegen Gebühr bei der Zentrale angefordert werden. Die neu übertragenen Musikstücke enthalten wiederum an den vorgegebenen Speicherstellen Inhaltsverzeichnisse mit Informationen über den Inhalt aller Daten eines Speicher-Chips, so daß der eigentliche Funktionsablauf zum Abspielen der Musikstücke dem unter Fig. 4 beschriebenen Funktionsablauf gleicht.

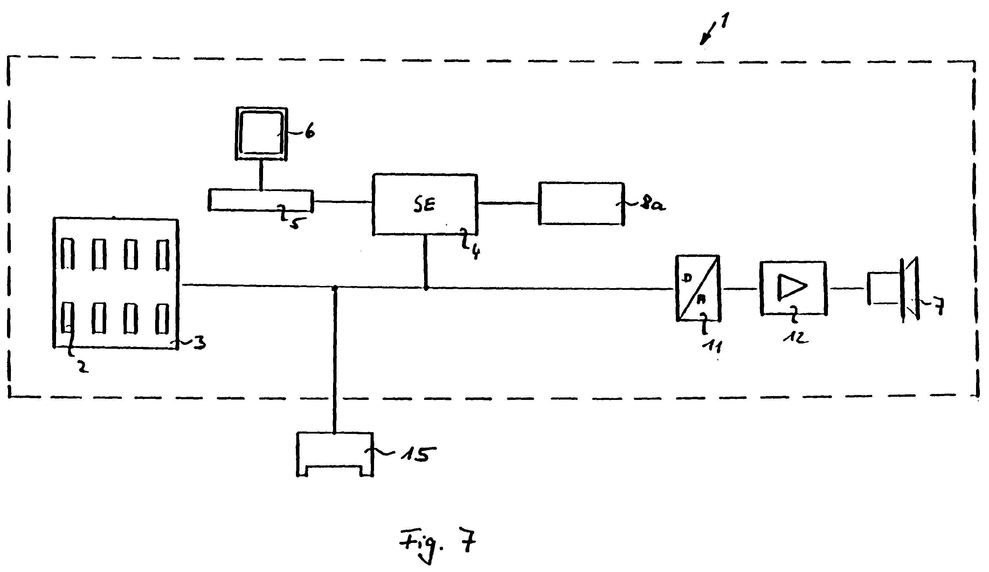

Fig. 6 zeigt ein drittes Ausführungsbeispiel der erfindungsgemäßen Multimedia-Box. Gegenüber Fig. 4 unterscheidet sich die Multimedia-Box 1 dabei dadurch, daß die Speicher-Chips ausgelagert sind. Die Speicher-Chips können sich in einer Zentrale befinden, von der aus über geeignete Datenfernleitungen 13 mit entsprechenden Modems 13a und 13b die Daten an mehrere Endgeräte überspielt werden. Hierdurch läßt sich die Anzahl der erforderlichen Speicher-Chips minimieren.

Fig. 7 zeigt ein viertes Ausführungsbeispiel der erfindungsgemäßen Multimedia-Box. Gegenüber Fig. 4 unterscheidet sich die Multimedia-Box dadurch, daß ein von außen zugänglicher Steckkartenadapter 15 für Speichersteckkarten vorgesehen ist. Der Steckkartenadapter 15 besteht dabei aus einem automatischen Ein- und Ausgabemechanismus (mail slot), in den Speichersteckkarten, wie sie in Fig. 2 dargestellt sind, zuführbar und wieder entnehmbar sind. Durch Entrichtung eines Geldbetrages kann der Steckkartenadapter aktiviert werden, wodurch sich dem Benutzer verschiedene Möglichkeiten eröffnen.

Zum einen kann der Benutzer unbespielte Speichersteckkarten selber erwerben, wobei hierfür eine ausreichende Anzabl von unbespielten Speichersteckkarten in der Multimedia-Box gelagert ist. Mit Hilfe einer Zusatzoption ist es auch möglich, daß der Benutzer eine Speichersteckkarte erwirbt, die vor Ausgabe an den Benutzer bereits mit ausgewählten Musikstücken und/oder Videos und/oder Bildern und/oder Grafiken bespielt worden ist. Hierzu ist von dem Benutzer ein zusätzlicher Geldbetrag zu entrichten und über die Tastatur 5 sind die gewünschten Daten auszuwählen. Selbstverständlich ist es auf diese Weise auch möglich, daß der Benutzer bereits bespielte Speichersteckkarten mit neuen Daten überschreibt.

Weiterhin hat der Benutzer die Möglichkeit, bespielte Speichersteckkarten nach Geldentrichtung dem Steckkartenadapter zuzuführen und diese dann von der Multimedia-Box abspielen zu lassen. Es ist hierbei auch möglich, daß der Benutzer die auf der Speichersteckkarte gespeicherten Daten auf freie Speicherplätze des Massenspeichers kopiert, um so von der jeweiligen Multimedia-Box dauerhaft Zugang zu den jeweiligen Daten zu haben, ohne daß er hierfür immer seine eigene Speichersteckkarte verwendet.

Schließlich ist es auch denkbar, daß auf den benutzereigenen Speichersteckkarten eine Zugangsberechtigung vorgesehen ist, wie das Entrichten entsprechender Geldbeträge vereinfacht. Hierzu wird auf der Speichersteckkarte von der Multimedia-Box ein Konto verwaltet, von dem nach Eingabe einer individuellen Geheimnummer Beträge abgebucht werden können oder auf das Beträge durch Entrichtung eines Geldbetrages eingezahlt werden können.

## Patentansprüche

1. Multimedia-Box, vorzugsweise mit Geld zu betätigende Musikbox,
mit einem Audio- und/oder Video- und/oder Bild- und/oder Grafik-Daten speichernden digitalen Massenspeicher,
mit einer Bedieneinheit zum auswählen digital gespeicherter Musikstücke und/oder Videos und/oder Bilder und/oder Grafiken und
mit einer einen Mikroprozessor umfassenden Steuereinheit, die die mit einem DA-Wandler in analoge Signale umgewandelten digitalen Audio-Daten einer Verstärker-Lautsprecher-Einheit und die Video- und/oder Bild- und/oder Grafik-Daten einem Monitor zuführt,
dadurch gekennzeichnet,
daß der Massenspeicher aus einem oder mehreren Halbleiter-Speicher-Chips besteht und
daß die Bedieneinheit aus einer Tastatur und/oder aus einer Fernbedienung und/oder aus einem Tastenmonitor besteht.
